# EUROPEAN PATENT APPLICATION

(11) **EP 4 725 585 A1**
(43) Date of publication of application: **15.04.2026**
(21) Application number: 24206387.3
(22) Date of filing: 14.10.2024
(51) Int. Cl.: B01D 53/04, B01D 46/00, B01D 46/24, B01D 46/30

(54) **EXTERNALLY PRELOADED ADSORBER CARTRIDGE AND ADSORBER MODULE**

(71) Applicant: MANN+HUMMEL GmbH, 71636 Ludwigsburg (DE)
(72) Inventor: WELLER, Benedikt, 71636 Ludwigsburg (DE); KLINSER, Andreas, 71636 Ludwigsburg (DE)
(74) Representative: Mann + Hummel Intellectual Property

(57) **Abstract**

An adsorber cartridge (24; 72) comprises an annular sleeve comprising an inner wall (28), an outer wall (30), a first end cap (34), and a second end cap (36), the first end cap (34) comprising an opening (52). The adsorber cartridge (24; 72) further comprises adsorbent material (40) contained in the annular sleeve, a movable compression plate (38; 84) arranged within the annular sleeve and between the first end cap (34) and the adsorbent material (40), and at least one actuation element (54; 82) arranged in the opening (52) and configured to bias the movable compression plate (38; 84) against the adsorbent material (40).

## Description

### Technical Field

Embodiments refer to an adsorber cartridge comprising an annular sleeve, which has an inner and an outer wall and a first and a second end cap, wherein the sleeve contains adsorbent material. The embodiments further refer to an adsorber module comprising a housing for receiving the adsorber cartridge.

### Background

An adsorber cartridge of this type is known from US 2018/0169566 A1.

Adsorber cartridges are used in various application fields for removing gas components from a gas flow. Typically, the adsorber cartridge has to be replaced from time to time, when the adsorbing capacity of the adsorbing material has been exploited.

Adsorbing material, or sorbent, is often provided as granular matter. It is therefore desired to keep the adsorbing material compact in order to avoid the formation of bypassing channels within the body of granular adsorbing material. Spring-loaded compression may be employed to this end. Usually, springs are provided within a replaceable cartridge.

Above-mentioned US 2018/0169566 A1 discloses an adsorber vessel, which includes an upper and a lower end cap. Several annular media cartridges are arranged inside the vessel. The media cartridges each includes an outer wall opposite an inner wall, which define a radial distance. The adsorber media are received between the inner and outer walls. An upper side and a lower side of each media cartridge can be uncontained or merely contained by some mesh material with apertures small enough to keep the adsorber media contained therein. In this regard, the upper and lower containing mesh can be considered as an end cap of the respective cartridge. Removing and replacing the media cartridges is tedious since a center column of the vessel, which axially extends though the cartridges restricts access for handling of the cartridges.

The vessel of US 2018/0169566 A1 further comprises an upper lid or end cap, which is openable to allow for the cartridges of media to be slid down into the vessel when the upper end cap is removed. The upper end cap also supports posts, to which a reference plate is fixed. A spring plate is arranged below the reference plate. Springs bias the spring plate downwardly away from the reference plate. Thus, the spring plate presses against the media cartridges.

From EP 4 227 575 A1 an emergency oxygen distribution assembly is known. An oxygen cartridge comprises a main body closed at its two opposite ends by a first cover and a second cover to delimit an internal volume used for storing the oxygen. A bed of particulate adsorbent is contained between to sieve structures. Spring-loaded valves are provided at opposite ends of the cartridge to block or allow gas exchange with the internal volume.

It is an object of the embodiments to allow for efficient replacement of adsorber cartridges to be installed in a housing of an adsorber module.

This is achieved by an adsorber cartridge according to claim 1, and an adsorber module according to claim 7. Advantageous embodiments are given in the subclaims and the description.

### Summary

In accordance with the embodiments, an adsorber cartridge is provided. The adsorber cartridge comprises an annular sleeve comprising an inner wall, an outer wall, a first end cap, and a second end cap, the first end cap comprising an opening. The end caps are arranged at opposite ends of the sleeve. In particular the first end cap is arranged at a first end of the cartridge; the second end cap is arranged at a second end of the cartridge. Typically, the end caps are permanently affixed to the inner and outer walls. The inner and outer walls may be concentric to one another.

The annular sleeve surrounds a central axis of the cartridge. Indications of directions such as axial, radial, or circumferential generally refer to the central axis, if not explicitly state otherwise.

The adsorber cartridge further comprises adsorbent material contained in the sleeve. In other words, the annular space between the inner and outer walls and the first and second end caps is at least partially filled with adsorbent material, also referred to as sorbent. The sorbent is typically a granular material.

To allow gas to pass through the adsorbent material, the inner and outer walls may be permeable to gas. The walls may comprise a lattice structure and a mesh, fabric (woven or non-woven) or the like, which covers flow openings in the lattice structure. The mesh or fabric prevents the sorbent particles from passing through the flow openings, while being gas permeable.

The first end cap may seal an inner space inside the inner wall. The second end cap may have a central opening towards the inner space inside the inner wall. The central opening of the second end cap at the second end allows gas to enter into or exit from the inner space. By closing the inner space at the first end by the first end cap, gas is forced to pass through the sorbent material with in radial inward or outward direction.

A connection nozzle may protrude from the second end cap. This allows connecting the cartridge to a (second) connection port at a (second) housing part.

The adsorber cartridge further comprises a movable compression plate arranged within the sleeve and between the first end cap and the adsorbent material. The movable compression plate serves to confine the adsorbent material inside the sleeve. Thus, the sorbent is kept tight during use. The formation of gaps, through which gas could pass without getting in touch with the sorbent, is prevented. If a granular sorbent shakes down (settles) during use, the movable compression plate moves from the first end plate towards the second end plate, to stay in contact with the adsorbent material. Thus, the sorbent is kept confined. Further, since the sorbent particles are kept in basically permanent contact with one another, fracturing, fragmentation or formation of debris due to vibrations is prevented. This contributes to keep the adsorber cartridge operational.

The movable compression plate may seal the annular space between the inner and outer walls. However, if the inner space inside the inner wall is sealed at the first end, for instance by the first end cap, gas passing through between the movable compression plate and the inner or outer wall does generally not affect adsorption performance, since the gas must pass through the bed of sorbent anyway. Generally, the movable compression plate is designed to fit between the inner and outer walls tight enough to prevent sorbent particles from passing through. A slight radial gap may reduce friction.

The adsorber cartridge further comprises at least one actuation element arranged in the opening and configured to bias the movable compression plate against the adsorbent material. At least when the cartridge is installed in a housing, the actuation element passes through the opening and interacts with the movable compression plate. This design allows for external actuation of the movable compression plate. There is no need to provide preloading means within the cartridge. Rather, preload is applied from a preloading unit of the housing, which receives the cartridge. Since the cartridge generally does not contain any preloading means, such as a spring, the design of the cartridge is simplified and less material is needed for manufacturing. The preloading unit of the housing is repeatedly used to confine the sorbent of the cartridges, which are successively installed in the housing. Further, installation of the cartridge may be as simple as inserting the cartridge into the housing (with the first and second end caps facing in the right direction) and closing the housing.

The at least one actuation element may be fixed to the movable compression plate. Assembly of the cartridge may be facilitated, when the actuation element(s) are held in place at the movable compression plate.

The movable compression plate and the at least one actuation element may be monolithic with one another. This allows for efficient manufacturing, for instance by making the movable compression plate and actuation element(s) as an injection molded plastics part.

The at least one actuation element(s) may protrude from the movable compression plate beyond the first end cap. This may further facilitate installation of the cartridge, since the cartridge may be arranged inside the housing in any rotary position with respect to the central axis.

The at least one actuation element may comprise least two, in particular at least four, actuation elements. The actuation elements may be regularly spaced in circumferential direction. Even confinement of the adsorbent material may be obtained and jamming of the movable compression plate may be prevented.

The at least two actuation elements may provide a conical interface (with respect to the central axis of the cartridge) configured to abut a preloading member of the housing. Thus, the cartridge is automatically centered at the first end when installed in the housing. The movable preloading member may have a conical face for engagement with the conical interface at the actuation elements.

The first end cap may define a stop for the movable compression plate. Thus, disengagement of the movable compression plate from the sleeve is prevented without the need to provide further parts or structures.

When the movable compression plate is positioned at the stop at the first end cap, the actuation element(s) may protrude beyond an external face around the opening(s) of the first end cap by at least 3 %, in particular at least 5%, of the overall length of the cartridge. This allows moving the movable compression plate sufficiently far from the first end cap towards the second end cap.

The adsorbent material may comprise any one or any combination of: carbon-based sorbents, in particular any one or any combination of activated carbon, activated coke, and carbon molecular sieves; oxidic sorbents, in particular zeolites and/or silica gel; and polymeric sorbents, in particular adsorber polymers and/or ion exchange resins.

The adsorber cartridge may be used to adsorb H2O, CO2 and or VOC (volatile organic compounds). For adsorption of VOC activated carbon or coke is particular useful.

The adsorber cartridge is preferably used for gas adsorption. However, adsorption of liquid phases from a gas or liquid flow is also conceivable.

The adsorber cartridge may be used in an air dryer (i.e. for removal of water from air), for instance for cabin air treatment or in pressurized air systems, e.g. for truck braking systems.

The adsorber cartridge may be used to capture harmful gases, e.g. in military applications or for the removal of hydrocarbons at airports.

The sleeve may comprise a first annular sleeve comprising an intermediate wall, the outer wall, the first end cap, and the second end cap, and a second annular sleeve comprising the intermediate wall, the inner wall, the first end cap, and the second end cap. The adsorbent material may be contained in the first annular sleeve. The adsorber cartridge may further comprise another adsorbent material contained in the second annular sleeve. The movable compression plate may be arranged between the first end cap and the adsorbent material and the other adsorbent material. Advantageously, the adsorber cartridge may contain two different types of adsorbent material for adsorbing two different types of liquids and/or gases, and these two different types of adsorbent material may be compressed by the movable compression plate.

The movable compression plate may further comprise a guiding structure extending from a bottom surface of the movable compression plate and between the inner wall and the outer wall, the guiding structure comprising an opening into which the intermediate wall (is insertable, and the guiding structure being configured to guide the movable compression plate when the movable compression plate is biased against the adsorbent material and the other adsorbent material and when the intermediate wall is inserted into the opening. Advantageously, the movable compression plate may be pressed evenly against the adsorbent material without moving out of place. In other words, by the guiding structure, the movable compression plate may maintain a substantially perpendicular angle with respect to the walls.

The embodiments further relate to an adsorber module. The adsorber module comprises the adsorber cartridge according to the embodiments, as described above.

The adsorber module further comprises a housing comprising a first housing part and a second housing part that are detachably fixable to one another, the housing being configured to receive the adsorber cartridge. For operation, the first and second housing parts are fixed to one another and the cartridge is arranged in a receiving space inside the housing. For replacement of the cartridge, the housing is opened. The first and second housing parts may be associated with the first and second end caps of the cartridge, respectively.

The adsorber module further comprises a preloading unit fixed to the housing and comprising a movable preloading member and a spring configured to bias the movable preloading member towards the adsorber cartridge (when installed in the housing). The movable preloading member may in particular be a preloading plate. The spring may be a coil spring. However, other types of springs are also conceivable, e.g. stacked disc springs. The preloading unit is typically fixed to the first housing part.

The preloading unit may be designed to provide compression to the adsorbent material, while the movable compression plate moves over a distance of at least 3 %, in particular at least 5 %, of the overall length of the cartridge. For instance, if the cartridge is 200 mm long, the movable compression plate may be spring loaded to confine the sorbent, while the movable compression plate moves 10 mm away from a stop at the first end cap.

The at least one actuation element may be configured to act between the movable preloading member and the movable compression plate. In other words, the movable preloading member may press against the movable compression plate via the actuation element(s), when the cartridge is installed in the housing. In particular, direct contact between the actuation element(s) and the movable compression plate and/or preloading member may be established.

Alternatively, the actuation elements may act between the movable compression plate and an end face of the housing.

The movable preloading member may comprise a conical face configured to abut the at least one actuation element. Thus, the cartridge is automatically centered at the first end when installed in the housing. The actuation elements may provide a conical interface for abutment of the conical face of the movable preloading member.

As already mentioned above, the at least one actuation element may protrude from the movable compression plate beyond the first end cap.

Alternatively, the at least one actuation element may protrude from the movable preloading member and may be configured to engage into the adsorber cartridge through the opening in the first end cap (in the assembled state of the adsorber module). This allows for a particularly simple design of the movable compression plate, which is to be replaced.

The actuation element(s) may be fixed to the movable preloading member, in particular wherein the actuation elements are monolithic with the movable preloading member. Engagement of actuation elements fixed to the movable preloading member may define a rotational position of the cartridge inside the housing. Irregular spacing of a plurality of actuation elements and openings may define one single rotational position for installation of the cartridge.

The second end cap of the cartridge may be supported against an axial end face of the second housing part. A connection nozzle of the second end cap may engage a (second) connection port at the axial end face of the second housing part. The second connection port and the connection nozzle allow introducing or discharging gas into or out of the cartridge.

The movable preloading member may be fixed to the spring. This prevents disengagement of the movable preloading member from the preloading unit. Handling during replacement of the cartridge is facilitated.

In embodiments, the spring may be supported directly at the first housing part.

In embodiments, the preloading unit may further comprise a spring support fixed to the first housing part. The spring is acts between the spring support and at the movable preloading member. In particular, the spring may directly brace against the spring support and/or the movable preloading member. Initial installation of the preloading assembly at the housing is facilitated if the preloading unit is provided as a pre-mounted assembly. For replacement of the cartridge, the preloading unit and first housing part are jointly removed from the second housing part.

The first housing part may comprise a first connection port. The first connection port allows discharging or introducing gas out of or into the housing, in particular from or to the outside of the cartridge.

The second housing part may comprise a receiving space for the adsorber cartridge. The spring support may be arranged between the first connection port and the receiving space. The spring support may comprise flow openings fluidically connecting the first connection port to the receiving space.

The adsorber module may comprise a guiding structure for the movable preloading member. The guiding structure may prevent radial dislocation and/or tilting of the movable preloading member. The guiding structure may be provided at the spring support or at the first housing part. The guiding structure may surround the movable preloading member and may comprise radially inwardly protruding ribs or the like.

The adsorber module may comprise a stopper configured to stop the movable preloading member. The stopper may be provided at the spring support or at the first housing part. The stopper holds the movable preloading member in vicinity or preferably in contact with the spring. The stopper may prevent the spring from completely unloading, when the housing is opened. This facilitates closing the housing since the distance the spring needs to be compressed is limited. The stopper for the movable preloading member may be arranged at an axial end of the guidance structure.

The adsorber module may further comprise another adsorber cartridge according to the embodiments, as described above. The housing may be further configured to receive the other adsorber cartridge. In other words, one single housing is provided to receive a plurality of adsorber cartridges.

In one embodiment, an individual preloading unit is provided for each adsorber cartridge.

In another embodiment, one preloading unit is provided for a plurality of adsorber cartridges. In particular, the movable preloading member may be configured to be biased towards the other adsorber cartridge. It is understood that multiple preloading units may be provided, each preloading unit being adapted for being biased against multiple cartridges in the housing.

### Brief Description of Drawings

Other advantages and features of the embodiments will be appreciated from the following description of embodiments with reference to the figures of the drawing, which show significant details, and from the claims. The individual features, as described above or explained below, may each be implemented individually or implemented together in any useful combination in variants of the embodiments.
Fig. 1 shows an adsorber module according to embodiments, in a schematic perspective view.
Fig. 2 shows the adsorber module of Fig. 1 in a schematic longitudinal section, which reveals an adsorber cartridge according to the embodiments and a preloading unit being arranged inside a housing.
Fig. 3 shows the adsorber cartridge from Fig. 2 in a schematic perspective view.
Fig. 4 shows an enlarged detail of Fig. 2, in the region where the preloading unit interacts with a compression plate of the adsorber cartridge.
Fig. 5 shows an adsorber module according to the embodiments, comprising one housing with one preloading unit, which compresses adsorbent material of several adsorber cartridges according to the embodiments.
Fig. 6 shows an adsorber module according to further embodiments, in a schematic perspective view.
Fig. 7 shows the adsorber module of Fig. 6 in a in a schematic longitudinal section, which reveals an adsorber cartridge according to the further embodiments and a preloading unit being arranged on the adsorber cartridge.

### Description of Embodiments

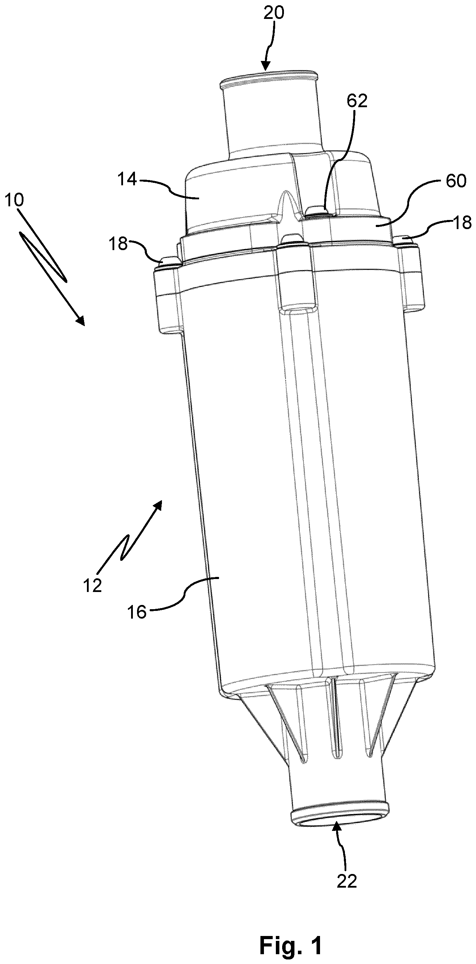

Fig. 1 shows an adsorber module 10, in particular its housing 12. The housing 12 comprises a first and second housing part 14, 16, detachably fixed to one another, here by means of screws 18. A first connection port 20 is formed at the first housing part 14. A second connection port 22 is formed at the second housing part 16. The connection ports 20, 22 allow to introduce gas into the housing 12, and to discharge gas from the housing 12. In particular, the second connection port 22 may be an inlet; the first connection port 20 may be an outlet. Note, that the flow direction might also be reversed. The gas fed into the module 10 contains components to be removed. After passing the module 10, the gas contains less of these components; the gas exiting the module 10 may in particular be free of certain components.

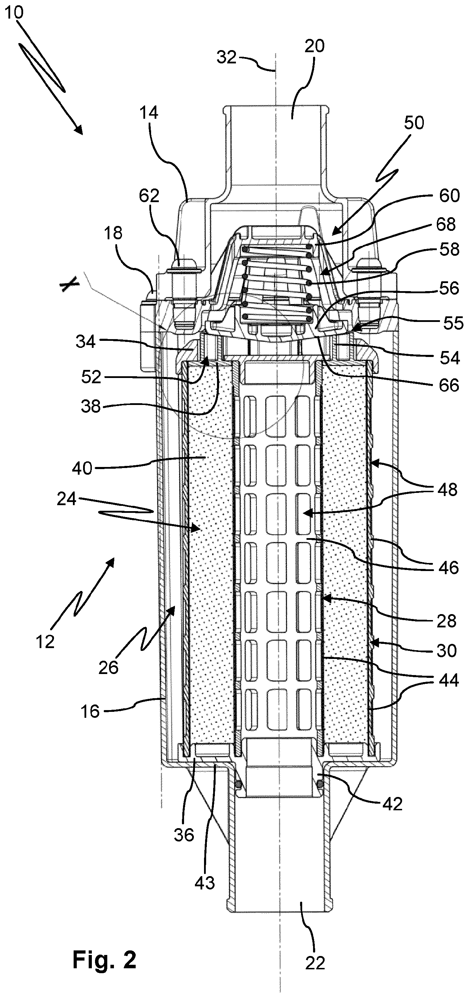

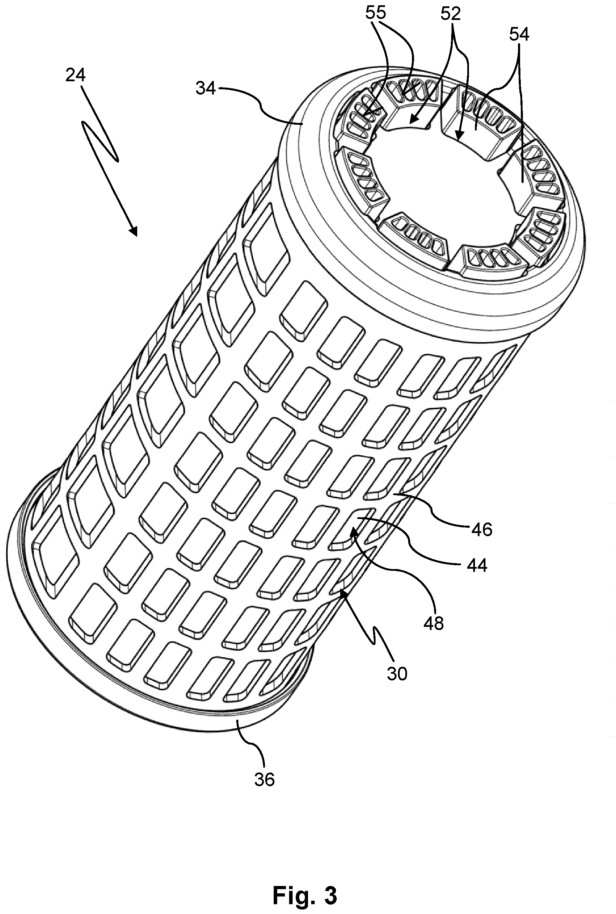

As is apparent from Fig. 2, an adsorber cartridge 24 is received inside the housing 12. In the depicted embodiment, a receiving space 26 for the cartridge 24 is formed within the second housing part 16. The adsorber cartridge 24 is also depicted in Fig. 3.

The cartridge 24 has an annular sleeve formed by an inner and an outer wall 28, 30, which concentrically surround a central axis 32. At a first axial end, a first end cap 34 is permanently fixed to the inner and outer walls 28, 30. At a second axial end, a second end cap 36 is permanently fixed to the inner and outer walls 28, 30.

A movable compression plate 38 is arranged below the first end cap 34, i.e. on the inside of the first end cap 34. In the depicted state, the compression plate 38 abuts the first end cap 34. The first end cap 34 defines a stop for motion of the compression plate 38 in axial direction away from the second end cap 36.

Granular adsorbent material 40 (or sorbent) is arranged inside the sleeve, i.e. between the inner and outer walls 28, 30 and between the second end cap 36 and the compression plate 38. The adsorbent material 40 may for instance comprise activated carbon or other types of carbon-based sorbent, for adsorption of odors or harmful gases. Depending on the substance to be adsorbed, other types of sorbent may be employed, e.g. oxidic sorbents, such as zeolithes or silica gel, to remove (liquid or gaseous) water from an airflow. The use of polymeric sorbents, in particular ion exchange resin, is also conceivable.

The second end cap 36 seals the annular space between the inner and outer walls 28, 30. Towards the radial inner space inside the inner wall 28, the second end cap 36 is open. In the depicted embodiment, a connection nozzle 42 protrudes from the second end cap 36. The connection nozzle 42 is sealingly received at the second connection port 22, when the second end cap 36 rests against an axial end face 43 of the second housing part 16.

The first end cap 34 sealingly closes the radially inner space at the first end of the cartridge 24.

The inner and outer walls 28, 30 are gas permeable. A mesh 44, fabric or the like is in each case attached to a lattice structure 46, having flow openings 48. The mesh 44 keeps the granular adsorbent material 40 inside the annular space, while being gas permeable.

Gas, which is introduced into the inner space through the second connection port 22 and the connection nozzle 42, passes through the walls 28, 30 and the adsorbent material 40 between the walls 28, 30 in a radial direction. Purified gas is discharged from the housing 12 at the first connection port 20.

In order to keep the adsorbent material 40 tight, the compression plate 38 is pressed against the adsorbent material 40, i.e. towards the second end cap 36. A preloading unit 50 is employed to this end, as will be explained in more detail below.

The first end cap 34 has openings 52, which allow actuating the compression plate 38. In this embodiment, actuation elements 54 are formed monolithic with the compression plate 38. The actuation elements 54 protrude beyond the first end cap 34. Free ends of the actuation elements 54 are inclined, in this case towards the first end cap 34, when viewed in radially inward direction. Thus, a conical interface 55, which surrounds the central axis 32, is formed. It is understood that the inclination could also face away from the first end cap 34, when viewed in radially inward direction (not depicted in detail).

The preloading unit 50 comprises a preloading member 56, which is designed as a preloading plate, and a spring 58, here a coil spring. In this embodiment, the preloading unit 50 further comprises a spring support 60.

The spring support 60 is fixed to the first housing part 14, here by means of screws 62. Note, that in this embodiment, the screws 18, for closing and opening the housing 12 engage the spring support 60 and the second housing part 16, while the screws 62 permanently attach the spring support 60 to the first housing part 14.

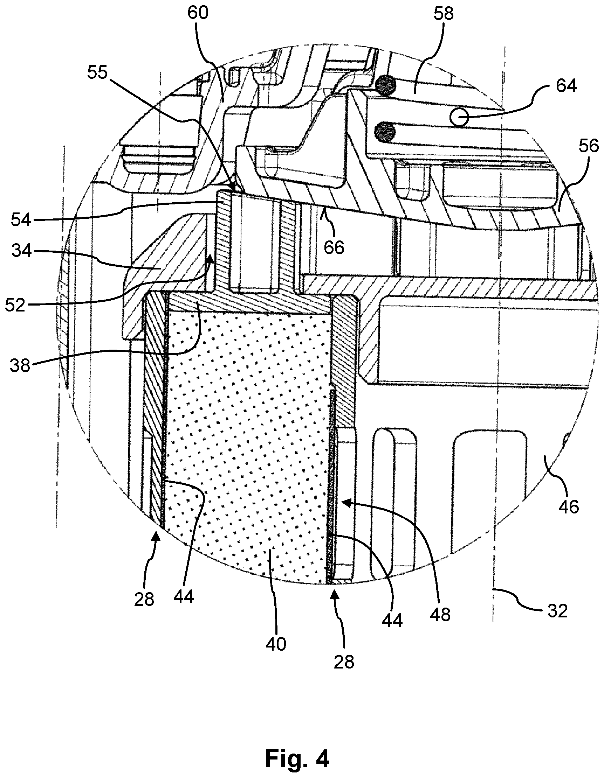

The spring 58 may be held at the spring support 60 in a press fit, so as not to disengage when the housing 12 is opened. A locking nipple 64 may be provided at the preloading member 56 in order to prevent the preloading member 56 from disengaging the spring 58, see Fig. 4. Note, that a locking nipple or other latching means might also be provided at the spring support and/or that a press fit might be established between the spring and the preloading member (not depicted in detail).

The spring 58 forces the preloading member 56 away from the spring support, i.e. towards the cartridge 24. In the assembled state, the preloading member 56 abuts the actuation elements 54 of the compression plate 38. The preloading member 56 has a conical face 66 for engagement with the conical interface 55 formed by the actuation elements 54. Here, the conical face 66 is convex. In an alternative embodiment, the conical face might be concave with the inclination of the actuation elements being reversed (not depicted in detail). Either way, the cartridge 24 is centered at its first end by a wedge effect between the conical face 66 and the conical interface 55.

As outlined above, the action of the spring 58 is transferred to the compression plate 38. Thus, the compression plate 38 is biased against the granular adsorbent material 40. This ensures tight packing of the adsorbent material 40, which prevents leak paths to open and reduces vibrational damage to the sorbent granules.

In this embodiment, the spring support 60 is cup shaped and spans across the diameter of the first housing part 14. In order to allow gas flow between the first connection port 20 and the receiving space 26, here in particular the outside of the cartridge 24, flow openings 68 are formed within the cup shaped body of the spring support 60.

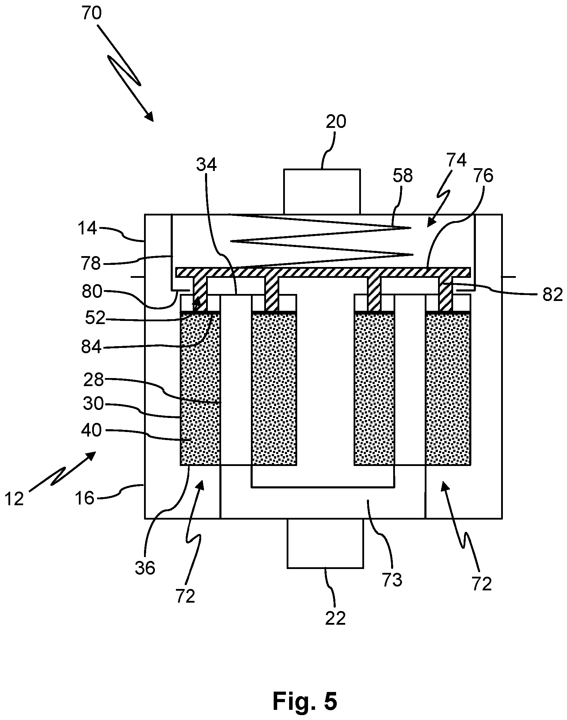

A further adsorber module 70 is depicted in Fig. 5. Primarily, the differences between modules 70 and 10 will be described below; for common features reference is made to the description above.

With module 70, several adsorber cartridges 72 are collectively received inside one housing 12. A distributor manifold 73 connects a second connection port 22 to the inner space radially inside the inner walls 28 of each of the cartridges 72. As outlined above with reference to Figs. 1 to 4, confined adsorbent material 40 cleans the gas flow before the gas is discharged via a first connection port 20.

In this embodiment, one common preloading unit 74 is provided for biasing the compression plates 38 of all cartridges 72 against the respective adsorbent material 40. One or more springs 58 may be arranged between a first housing part 14 and a plate shaped preloading member 76.

A guiding structure 78 surrounds the preloading member 76 in order to prevent radial motion and tilting. A stopper 80 for the preloading member 76 is provided at the free end of the guiding structure 78.

In this embodiment, actuation elements 82 protrude from the preloading member 76. The preloading member 76 and the actuation elements 82 may be formed by one monolithic body or fixed to one another.

The actuation elements 82 engage into openings 52 of first end caps 34 of the adsorber cartridges 72 and abut a compression plate 84 of the respective cartridge 72. Here, the compression plates 84 are designed as basically flat rings.

It is understood that actuation elements protruding from the preloading member could also be used with one single cartridge per preloading unit. Likewise, actuation elements protruding from the compression plates of several cartridges might abut one common preloading member.

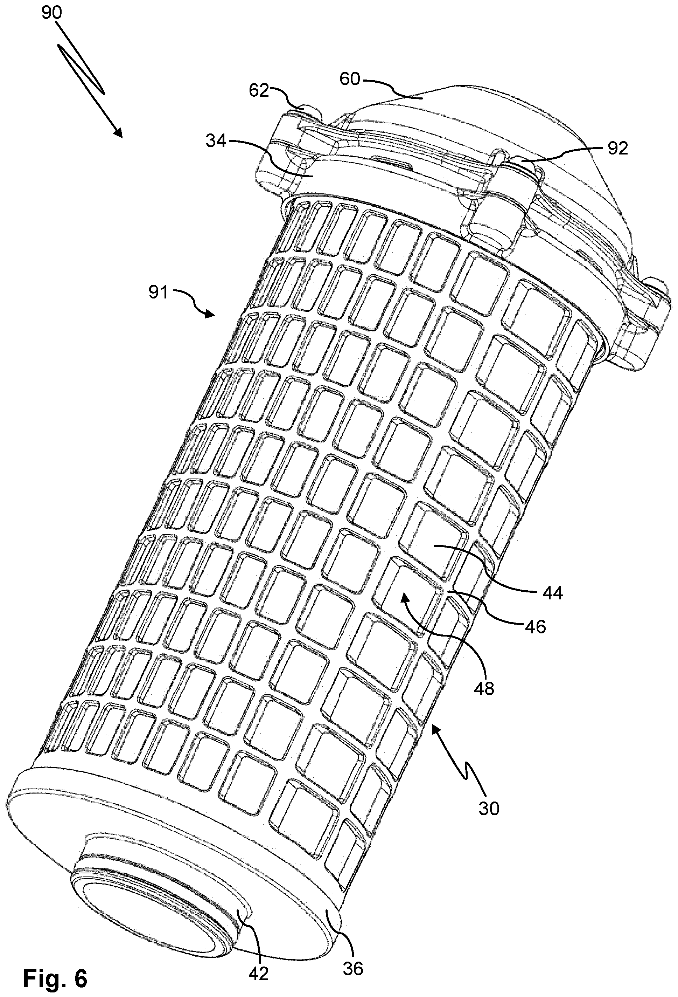

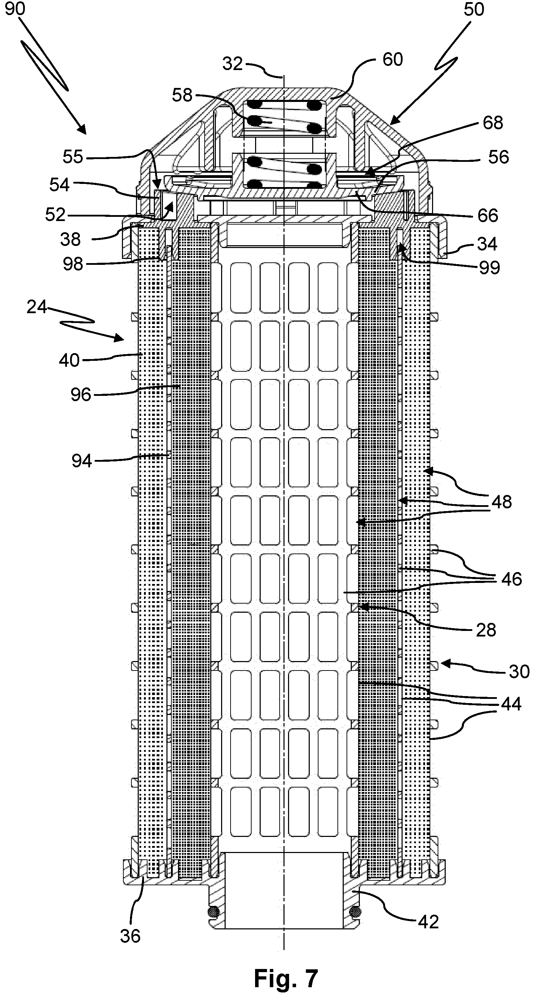

Figs. 6 and 7 show a further adsorber module 90. Differences between the adsorber modules 90 and 10 will be described below; for common features, reference is made to the description above.

Referring to Fig. 6, the adsorber module 90 includes the spring support 60 and an adsorber cartridge 91 including the first end cap 34. The spring support 60 is fixed to the first end cap 34 by means of the screws 92. In other words, the screws 92 attach the spring support 60 to the first end cap 34.

Referring to Fig. 7, the adsorber cartridge 91 further includes an intermediate wall 94 forming a first annular sleeve with the outer wall 30 and forming a second annular sleeve with the inner wall 28. At the first axial end, the first end cap 34 is further permanently fixed to the intermediate wall 94. At the second axial end, the second end cap 36 is further permanently fixed to the intermediate wall 94.

The first granular adsorbent material 40 (or sorbent) is arranged inside the first annular sleeve, i.e. between the outer and intermediate walls 30, 94 and between the second end cap 36 and the compression plate 38. Second granular adsorbent material 96 (or sorbent) is arranged inside the second annular sleeve, i.e. between the intermediate and inner walls 94, 28 and between the second end cap 36 and the compression plate 38. The second adsorbent material 96 may for instance comprise activated carbon or other types of carbon-based sorbent, for adsorption of odors or harmful gases. Depending on the substance to be adsorbed, other types of sorbent may be employed, e.g. oxidic sorbents, such as zeolithes or silica gel, to remove (liquid or gaseous) water from an airflow. The use of polymeric sorbents, in particular ion exchange resin, is also conceivable. The second adsorbent material 96 may be different than the first adsorbent material 40.

The intermediate wall 94 is gas permeable. The mesh 44, fabric or the like is attached to the lattice structure 46, having the flow openings 48. The mesh 44 keeps the second adsorbent material 96 inside the second annular sleeve, while being gas permeable. Gas passes through the walls 28, 30, 94 and the adsorbent material 40, 96 between the walls 28, 30, 94 in the radial direction.

In order to keep the adsorbent material 40, 96 tight, the compression plate 38 is pressed against the adsorbent material 40, 96, i.e. towards the second end cap 36. The compression plate 38 further includes a guiding structure 98 extending from a bottom surface of the compression plate 38 and between the inner and outer walls 28, 30. The guiding structure 98 includes an opening 99 into which the intermediate wall 94 is insertable. The guiding structure 98 is configured to guide the compression plate 38 when the compression plate 38 is pressed against the adsorbent material 40, 96 and when the intermediate wall 94 is inserted into the opening 99 of the guiding structure 98, so that the compression plate 38 is pressed evenly against the adsorbent material 40, 96 without moving out of place. In other words, by the guiding structure 98, the compression plate 38 may maintain a substantially perpendicular angle with respect to the walls 28, 30, 94.

In summary, the embodiments relate to an adsorber cartridge with a movable compression plate. The compression plate is arranged inside a sleeve, which is filled with adsorbent material. Generally, no preloading means is provided inside the cartridge. Rather, external preload is applied to the cartridge. A preloading unit is arranged at a housing for receiving the cartridge. In particular, the preloading unit may be coupled to the compression plate via at least one actuation element. Adjacent to the compression plate, an end cap of the sleeve has openings, which allow moving the compression plate relative to the sleeve by external actuation. When the cartridge is replaced, the preloading unit is generally reused.

### Reference Signs List

Adsorber module 10
Housing 12
First housing part 14
Second housing part 16
Screws 18
First connection port 20
Second connection port 22
Adsorber cartridge 24
Receiving space 26
Inner wall 28
Outer wall 30
Central axis 32
First end cap 34
Second end cap 36
Compression plate 38
Adsorbent material 40
Connection nozzle 42
Axial end face 43
Mesh 44
Lattice structure 46
Flow openings 48
Preloading unit 50
Opening 52
Actuation elements 54
Conical interface 55
Preloading member 56
Spring 58
Spring support 60
Screws 62
Locking nipple 64
Conical face 66
Flow openings 68
Adsorber module 70
Adsorber cartridges 72
Distributor manifold 73
Preloading unit 74
Preloading member 76
Guiding structure 78
Stopper 80
Actuation element 82
Compression plate 84
Adsorber module 90
Adsorber cartridge 91
Screws 92
Intermediate wall 94
Second adsorbent material 96
Guiding structure 98
Opening 99

## Claims

1. An adsorber cartridge (24; 72; 91) comprising:
an annular sleeve comprising an inner wall (28), an outer wall (30), a first end cap (34), and a second end cap (36), the first end cap (34) comprising an opening (52);
adsorbent material (40) contained in the annular sleeve;
a movable compression plate (38; 84) arranged within the annular sleeve and between the first end cap (34) and the adsorbent material (40); and
at least one actuation element (54; 82) arranged in the opening (52) and configured to bias the movable compression plate (38; 84) against the adsorbent material (40).

2. The adsorber cartridge (24; 91) according to claim 1, wherein the at least one actuation element (54) is fixed to the movable compression plate (38), in particular wherein the movable compression plate (38) and the at least one actuation element (54) are monolithic with one another.

3. The adsorber cartridge (24; 91) according to claim 1 or 2, wherein the at least one actuation element (54) comprises at least two actuation elements (54) providing a conical interface (55) configured to abut a preloading member (56).

4. The adsorber cartridge (24; 72; 91) of any one of the preceding claims, wherein the first end cap (34) defines a stop for the movable compression plate (38; 84).

5. The adsorber cartridge (24; 72; 91) according to any of the preceding claims, wherein the adsorbent material (40) comprises any one or any combination of:
carbon-based sorbents, in particular any one or any combination of activated carbon, activated coke, and carbon molecular sieves;
oxidic sorbents, in particular zeolites and/or silica gel; and
polymeric sorbents, in particular adsorber polymers and/or ion exchange resins.

6. The adsorber cartridge (91) according to any of the preceding claims, wherein the annular sleeve comprises:
a first annular sleeve comprising an intermediate wall (94), the outer wall (30), the first end cap (34), and the second end cap (36); and
a second annular sleeve comprising the intermediate wall (94), the inner wall (28), the first end cap (34), and the second end cap (36),
wherein the adsorbent material (40) is contained in the first annular sleeve,
wherein the adsorber cartridge (91) further comprises another adsorbent material (96) contained in the second annular sleeve, and
wherein the movable compression plate (38) is arranged between the first end cap (34) and the adsorbent material (40) and the other adsorbent material (96).

7. The adsorber cartridge (91) according to claim 6, wherein the movable compression plate (38) further comprises a guiding structure (98) extending from a bottom surface of the movable compression plate (38) and between the inner wall (28) and the outer wall (30), the guiding structure (98) comprising an opening (99) into which the intermediate wall (94) is insertable, and the guiding structure (98) being configured to guide the movable compression plate (38) when the movable compression plate (38) is biased against the adsorbent material (40) and the other adsorbent material (96) and when the intermediate wall (94) is inserted into the opening (99).

8. An adsorber module (10; 70) comprising:
the adsorber cartridge (24; 72) according to any one of the preceding claims;
a housing (12) comprising a first housing part (14) and a second housing part (16) that are detachably fixable to one another, the housing (12) configured to receive the adsorber cartridge (24; 72); and
a preloading unit (50; 74) fixed to the housing (12) and comprising a movable preloading member (56; 76) and a spring (58) configured to bias the movable preloading member (56; 76) towards the adsorber cartridge (24; 72).

9. The adsorber module (10) according to claim 8, wherein the movable preloading member (56) comprises a conical face (66) configured to abut the at least one actuation element (54).

10. The adsorber module (70) according to claim 8, wherein the at least one actuation element (82) protrudes from the movable preloading member (76) and is configured to engage into the adsorber cartridge (72) through the opening (52) in the first end cap (34).

11. The adsorber module (10; 70) according to any one of claims 8 to 10, wherein the movable preloading member (56; 76) is fixed to the spring (58).

12. The adsorber module (10) according to any one of claims 8 to 11, wherein the preloading unit (50) further comprises a spring support (60) fixed to the first housing part (14).

13. The adsorber module (10) according to claim 12, wherein the first housing part (14) comprises a first connection port (20),
wherein the second housing part (16) comprises a receiving space (26) for the adsorber cartridge (24), and
wherein the spring support (60) comprises flow openings (68) fluidically connecting the first connection port (20) to the receiving space (26).

14. The adsorber module (70) according to any one of claims 8 to 13, further comprising a stopper (80) configured to stop the movable preloading member (76).

15. The adsorber module (70) according to any one of claims 8 to 14, further comprising another adsorber cartridge (72) according to any one of claims 1 to 6,
wherein the housing (12) is further configured to receive the other adsorber cartridge (72), and
wherein the movable preloading member (76) is configured to be biased towards the other adsorber cartridge (72).
